(19) **Europäisches Patentamt** **European Patent Office** **Office européen des brevets**

(11) **EP 4 235 166 B1**

(12) **EUROPEAN PATENT SPECIFICATION**

(45) Date of publication and mention of the grant of the patent:
**24.06.2026 Bulletin 2026/26**

(21) Application number: **22159209.0**

(22) Date of filing: **28.02.2022**

(51) International Patent Classification (IPC):
*G01N 27/447* (2006.01) *G01N 21/63* (2006.01)

(52) Cooperative Patent Classification (CPC):
**G01N 27/44721; G01N 27/44752;** G01N 21/6408; G01N 21/6445; G01N 21/65

(54) **METHOD FOR DETERMINING A CHARGE OF A MOLECULE IN SOLUTION OR FOR DETERMINING AN IONIC STRENGTH OF A SOLUTION**

VERFAHREN ZUR BESTIMMUNG EINER LADUNG EINES MOLEKÜLS IN LÖSUNG ODER ZUR BESTIMMUNG EINER IONENSTÄRKE EINER LÖSUNG

PROCÉDÉ DE DÉTERMINATION DE LA CHARGE D'UNE MOLÉCULE EN SOLUTION OU DE DÉTERMINATION DE LA FORCE IONIQUE D'UNE SOLUTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**30.08.2023 Bulletin 2023/35**

(73) Proprietor: **Universität Göttingen**
**37073 Göttingen (DE)**

(72) Inventors:
• **KAREDLA, Narain**
**37073 Göttingen (DE)**
• **ENDERLEIN, Jörg**
**37073 Göttingen (DE)**

(74) Representative: **Schulz Junghans**
**Patentanwälte PartGmbB**
**Großbeerenstraße 71**
**10963 Berlin (DE)**

(56) References cited:
**US-A- 3 766 048** **US-A- 5 215 883**
**US-A1- 2002 040 851**

• HERV� COTTET ET AL: "On the ionic strength dependence of the electrophoretic mobility: From 2D to 3D slope-plots", ELECTROPHORESIS, vol. 38, no. 5, 20 December 2016 (2016-12-20), pages 624 - 632, XP071504083, ISSN: 0173-0835, DOI: 10.1002/ELPS.201600329
• ENDERLEIN J ET AL: "Modeling charge separation in charged nanochannels for single-molecule electrometry", THE JOURNAL OF CHEMICAL PHYSICS, vol. 156, no. 10, 14 March 2022 (2022-03-14), pages 105104, XP009537439, ISSN: 0021-9606, DOI: 10.1063/5.0074732

**Description**

The invention relates to a method for determining a charge of a solute comprising at least one kind of particles in an aqueous solution or for determining an ionic strength of a solution. Further, the invention relates to a system for executing the method

The invention also relates to a computer program product configured to execute the method steps and to control the system to execute the method of the invention. Determining a charge of particles of a solute is an elaborate task. Particularly, measuring electric charges of biological molecules in ion-containing aqueous solutions in bulk as well as at single-molecule level is far from trivial. In the art, solidstate nanopores have been used to characterize the charge and size of biomolecules and they offer great potential for scalable high-throughput rapid protein and nucleicacid analysis. However, this method is limited by the passage time of a single amino or nucleic acid, which is typically on the order of 10 ns to 1 $\mu$s, poor signal-to-noise ratio due to thermal noise, interactions with the nanopore's walls, and the detrimental effect of the applied high voltages on the protein or oligonucleotide structure itself [1, 2]. As an alternative, a high-precision method to measure the electrical charge on single nanometer-scale objects, a geometry-induced electrostatic fluidic trap has been introduced, which operates by modulating a spatial interaction potential of a charged object by introducing topographical indentations onto a sub-micrometer channel with like-charged walls and stably confining the particles in local interactions potential minima. By measuring the escape rates, the charge of the particles may be determined [3, 4].

Furthermore, US2002/040851 discloses determining the electrophoretic mobility of particles in an aqueous solution in a measurement space. Electrodes provide an electrical potential difference. An illumination source, a lens and a detector are arranged to optically measure the particle distribution. A computer determines an optical parameter and an electrophoretic mobility.

All these methods require a well-defined surface structure of the wall surfaces and sometimes *a priori* knowledge of the hydrodynamic radii of the particles. These devices are therefore particularly elaborate and costly to produce.

The invention is set out to solve the problems of the methods known in the art.

The object is achieved by the method having the features of claim 1.

Advantageous embodiments are described in the dependent claims.

The method allows determining simultaneously a hydrodynamic size and an electrical charge of a solute or an ionic strength of a solution comprising the solute.

According to a first aspect of the invention, a method for determining a charge of a solute comprising at least one kind of particles in an aqueous solution or for determining an ionic strength of a solution, comprises at least the steps of claim 1.

It is noted that the ionic strength has to be greater than zero mol/l, i.e the solution has to contain ions. Particularly, the ionic strength should be greater than 500 nmol/l. More particularly, the ionic strength should be in the range of 1 $\mu$mol/l to 1 mmol/l. However, in case the ionic strength is to be determined, the ionic strength may be generally unknown. In case the ionic strength is to be determined, the charge of the solute needs to be known. Correspondingly, in case the charge of the solute is to be determined, the ionic strength of the solution needs to be known.

Depending on the embodiment of the method, it is possible to determine the electric charge of the solute down to a single molecule level or in bulk. It is further possible, depending on the specific embodiment of the invention, to determine the charge of different kinds of particles comprised in the solute for each kind of particle individually.

The term 'particle' particularly refers to a massive particle that is susceptible to Brownian motion in the solution. Further, the particle may be of a size that gives rise to a localized optical signal, such as a scattering signal or a luminescence signal.

The molecular weight of the particles of the solute is particularly greater than 50 Dalton,

The term 'kind of particle' in the context of the current specification particularly refers to particles having the same electric charge in the solution. That is, particles of the same kind carry the same charge.

The term 'solute' particularly refers to the entirety of particles of different kinds. It is noted that the term 'solute' particularly does not comprise the entirety of the solution but only the particles which charge may be determined.

According to the invention, the solute comprises at least one kind of particles. That is, the solute may comprise a plurality of kind of particles, which differ in their electric charge.

According to another embodiment of the invention, the electrical surface potential is generated electrically, e.g. by electrodes at the at least one wall portion of the measurement space, or chemically by electrically charged chemical surface groups that are arranged at the at least one wall portion.

The measurement space may be limited by at least one wall portion.

The invention can be executed according to two generally differing variants linked by the same inventive concept.

A first variant of the invention makes use of an effect related to an electric field interaction of the solute with an electrically conductive layer, typically metal or metallike layer allowing for a coupling of the solute to a local density of modes of the layer. A second variant of the invention exploits a dependency of a drift velocity of charged particles of the solute in a laminar parabolic flow exposed to an electric potential. It is noted that a combination of the two variants is possible, allowing a more robust measurement.

For the second variant it is necessary that the measurement space comprises at least two wall portions, in order to allow the formation of a laminar, parabolic flow between the at least two wall portions. The wall portions are arranged at a constant distance to each other. The two wall portions may be comprised in a single wall limiting the measurement space.

For the first variant, it is sufficient that the measurement space is limited by a single wall portion.

For both variants of the invention, the inventors have found a relation that allows determining - via the evaluation of an optical parameter recorded from the solute - a distribution of the solute in the measurement space. Particularly, at the moment the solute in the ionic solution is exposed to an externally applied electrical potential, the particles (as well as the ions in the solution) may rearrange in the measurement space depending on their charge. The inventors were able to formulate a relation between the solute's distribution in the measurement space and the resulting optical parameter. As elaborated previously, in order for the optical parameter to be indicative for the solute's distribution in the measurement space, the invention offers two variants.

In the first variant, it is exploited that the optical signal from the solute exhibits a distance-dependent electromagnetic field coupling of the particles to the local density of modes of the at least one wall portion. Thus, even though the optical signal may not be sufficiently spatially and/or temporally resolved for optically scanning the solute's distribution in the measurement space, it comprises a superposition of the optical signals recorded from the solute's particles. The inventors have found that it is possible to nonetheless extract the solute's distribution particularly along a direction orthogonally to the at least one wall portion from the optical parameter derived from the superimposed optical signals from the particles.

Further, knowing the solute's distribution in the measurement space allows extracting the electric charge of the solute, as the solute's distribution depends on the electric surface potential of the at least one wall portion. Further, as the ionic strength influences the shielding of the electrical potential in the solution, the ionic strength of the solution needs to be known in order to determine the electric charge of the solute. While the optical parameter may reflect only the solute's distribution along an orthogonal direction from electrical surface potential (e.g. along the z-axis), it is safe to assume that in the absence of any other components in the measurement space (such as recesses or protrusions of the wall portion) the solute's distribution has no dependency in a plane parallel to the electrical surface potential.

Thus, it is possible to determine the solute's charge in case the ionic strength of the solution and the electrical surface potential is known.

In an equivalent fashion and following the same inventive concept, this relation may be exploited for determining the ionic strength of the solution, in case the solute's charge is known.

Turning to the second variant, the inventors have found that the optical signal may be made sensitive to the charge of the solute by applying a flow to the solution, wherein said flow is a parabolic, laminar flow. Without any electrical surface potential or in case the particles of the solute have neutral charge, the average drift velocity, i.e. the average velocity of the particles of the solute in the solution corresponds to the average flow velocity. The average flow velocity may be determined from an average of the flow velocities along the parabolic flow profile. As the uncharged particles always undergo Brownian motion, the uncharged particles on average sample the complete flow profile and will thus flow with the average flow velocity.

The situation changes in case the solution is exposed to an electrical surface potential. Then, assuming at least one kind of particles of the solute is electrically charged, the average drift velocity of the charged particles is increased or decreased with regard to the average flow velocity. The drift velocity depends on the charge of the particles. Therefore, the second variant of the invention allows resolving and identifying different kinds of particles depending on their charge as well as determining the charge of the different kinds of particles.

The optical parameter and the optical signal are therefore particularly altered only with regard to the position of the optical signal, wherein said position is optically resolved and evaluated for the drift velocity or an equivalent entity.

The measurement space may be comprised in a measurement chamber, having two wall portions particularly opposite of each, or a channel. The channel, while potentially comprising a single channel wall only, might still comprise two wall portions that are comprised by the channel wall at different portions of the channel wall. However, it might also be that the channel wall consists of a single, particularly circumferential, wall portion covering the complete channel wall of the measurement space. The channel may adopt a curved or meandering shape, such that the flow follows the shape of the channel. This has the advantage, that a longer portion of the flow of the solution in the channel fits in an area covered by the channel, which allows monitoring the flow for an extended length and thus time in a camera's field of view.

Particularly, in contrast to the prior art, the one or more wall portions are devoid of protrusions or recesses, which allows for a cost-efficient manufacturing and increased robustness of the method as well as the system executing the method. That is, the one or more wall portions may be curved, but flat.

In case the measurement space is limited by two or more wall portions, the wall portions may be arranged opposite to each other such that the wall portions face each other pairwise.

Recording of the optical signal may be achieved by means of an optical detector, such as a camera or a point detector. Using a point detector, may require a scanning mechanism for acquiring a spatial information of the optical signal.

However, particularly for the first variant of the invention, no scanning is required. A point measurement may be sufficient to acquire the optical signal and determine the charge or the ionic strength.

The determination of the charge of the solute is particularly achieved by calculating the solute's distribution for a given charge of the solute, for the electrical surface potential and the ionic strength of the solution and by determining an expected optical parameter for the calculated distribution for the given charge of the solute. This way, a look-up table may be generated that relates the optical parameter directly to the solute's charge. The solute's charge may then be determined by means of an interpolation method for the look-up table for the measured optical parameter. Alternatively, the charge of the solute may be directly calculated for the measured optical parameter. For determining the ionic strength of the solution, the analogues procedure is applicable.

The method according to the invention allows resolving the charge of the particles in the solute with an accuracy of at least 1e (1e = electron charge) - independent of which variant may be used.

According to another embodiment of the invention, in case the measurement space comprises two or more wall portions exhibiting the electrical surface potential, the electrical surface potentials of the wall portions have the same voltage sign.

According to another embodiment of the invention, in case the measurement space comprises two or more wall portions exhibiting the electrical surface potential, the electrical surface potentials of the wall portions have the same magnitude or voltage value.

According to another embodiment of the invention, at least one kind of particles of the at least one kind of particles comprises charged particles.

According to another embodiment of the invention, the optical signal is a luminescence signal or a Raman signal, particularly wherein the optical parameter is at least one of:

- a luminescence lifetime of the optical signal of the solute,

- a luminescence intensity or a plurality of luminescence photons,

- a polarization of the optical signal, particularly of the luminescent signal,

- a wavelength of the optical signal, particularly of the luminescent signal,

- a spectrum of the optical signal, such as a fluorescence lifetime spectrum, a Raman spectrum or a steady state emission spectrum, and/or

- an interference scattering.

The term 'luminescence' relates to the ability of the particle to emit light e.g. due to a chemical reaction or in response to illumination. Luminescence comprises the notion of fluorescence.

It is noted that with regard to the first variant of the invention, the coupling to the local density of modes affects the excitation physics of the particles such that a Raman scattering process as well as a fluorescence process of the particle will be altered by the coupling of the particle to local density of modes. Therefore, both, a scattering signal or a luminescent signal or another suitable optical signal is suitable for the method.

Particularly, in case of fluorescence, a total emission power of the particle is changed depending on the coupling to the local density of modes. The change of emission power results in a change of a variety of fluorescence parameters. Examples of sensitive fluorescence parameters are the emission spectrum, e.g. a shift of the emission spectrum (and thus for example a shift of a central emission wavelength), a change of the lifetime spectrum and thus a change of an associated fluorescence lifetime. The coupling may also affect emission angles and an angular polarization distribution of the emitted fluorescence photons of the particles. Therefore, a suitable fluorescence parameter may be given also by determining the polarization of the optical signal, e.g. determining a fluorescence anisotropy of the optical signal. In a similar manner, the coupling may affect an intensity of Raman peaks of the Raman spectrum, which in turns comprises the information on the solute's distribution in the measurement space.

Particularly, in case the optical parameter is a lifetime spectrum, such as the fluorescence lifetime spectrum, the optical parameter may be reduced to an average lifetime associated to the lifetime spectrum.

With regard to the intensity or a plurality of photons it is noted that the intensity may be best used for the second variant of the invention, in which a spatially resolved location information of the solute is associated to the optical parameter. For this purpose, it may be sufficient to solely monitor the signal intensity in a spatially resolved manner.

It is noted that the optical parameter may comprise a plurality of the optical parameters listed above. It is therefore possible to measure anisotropy, i.e. a polarization, simultaneously to the fluorescence lifetime and to determine the electric charge of the solute or the ionic strength for the anisotropy as well as for the lifetime, either from a combined relation or separately.

The following embodiments detail advantageous aspects of the first variant of the invention.

According to this first variant of the invention, the one or more wall portions each comprise an electrically conductive layer, wherein the optical signal of the solute is distance-sensitive to an electromagnetic field coupling of the solute and the electrically conductive layer of the one or more wall portions, particularly wherein the electromagnetic field coupling is a local density of modes coupling, such that the optical parameter is indicative of a distance distribution of the solute.

In previous paragraphs it has been laid out, how the coupling of the particles to the local density of modes might affect the optical signal and how the coupling therefore provides an information on the solute's distribution in the measurement space at least along a direction orthogonal to the layer.

Particularly, the one or more wall portions are planar and/or flat, such that the electrically conductive layer is planar and/or flat as well.

The electrically conductive layer may comprise or consist of a noble metal, such as gold or silver. The electrically conductive layer may also consist of or comprise aluminum. The electrically conductive layer may also consist or comprise graphene or indium tin oxide (ITO). ITO is optically transparent in the visible wavelength range, such that recording of the optical signal through the layer is possible, which allows a greater flexibility of the measurement setup design. The layers may be so thin that they are at least partially transparent.

The coupling of the particles to the electrically conductive layer particularly depends on the characteristics of the layer, and thus on its thickness and composition. Thus, the choice of the layer's material may be made according to the optical signal that is to be recorded and in which wavelength range the optical signal is expected.

According to another embodiment of the invention, the electrically conductive layer of the one or more wall portions forms an electrode, wherein the electrode is provided with an electrical voltage, such that the electrical surface potential is generated at the one or more wall portions.

According to another embodiment of the invention, the electrically conductive layer arranged such on the one or more wall portions that the electrically conductive layer is in direct contact with the solution. As the coupling to the local density of modes is sensitive on the nanometer scale, this embodiment allows for minimizing a distance between the solution and the electrically conductive layer, such that the coupling to the local density of modes is not weakened by an additional spacer layer between the electrically conductive layer and the solution.

According to another embodiment of the invention, the electrically conductive layer is arranged on the one or more wall portions, wherein the wall portions are formed by glass. Between the wall portion and the electrically conductive layer, an adhesion layer, such as nickel, may be arranged allowing the electrically conductive layer for an increased adherence to the wall portion.

According to another embodiment of the invention, the one or more wall portions are curved, particularly with a constant radius of curvature. The latter may be the case for a channel forming the measurement space. The channel may exhibit a circular cross-section orthogonally to the flow direction.

According to a further embodiment of the invention, an optical reference parameter is acquired that reflects the optical parameter in the absence of the electromagnetic field coupling, wherein the electric charge of the solute or the ionic strength of the solution is determined by further relating the optical parameter to the optical reference parameter.

Particularly, the optical reference parameter is acquired from a data sheet, a simulation, and/or a measurement of the optical reference parameter in a measurement space devoid of the electrically conductive layer. This may be facilitated in a portion of the measurement space that is devoid of the layer.

The optical reference parameter may therefore be measured in a separate measurement.

For example, in case the optical parameter is the fluorescence lifetime of the particles, the optical reference parameter corresponds to the fluorescence lifetime of the particles in the solution, when no coupling with the electrically conductive layer and the particles is present.

Often times data sheets for fluorescent dyes comprise the fluorescence lifetime for aqueous solutions.

This embodiment allows to determine the charge of the solute from a deviation of the optical parameter in the measurement space from the optical reference parameter.

As the deviation may be expressed by means of a fraction or percentage, it is possible to determine the charge of the solute from a relative value derived from the optical parameter with respect to the reference parameter, e.g. by relating the optical parameter to the reference parameter in form of a fraction. This embodiment allows determining the charge of the solute /or the ionic strength of the solution from a look-up table that has been pre-calculated for various deviations. e.g. relative values of the measured optical parameter.

For example, by means of an interpolation method, the solute's charge may be determined from the look-up table.

In case the optical parameter is the fluorescence lifetime, the lifetime is shorter or longer with respect to the reference parameter. In case the optical parameter is the polarization or an anisotropy, the anisotropy gets smaller or larger compared to the optical reference parameter. Similarly, in case the optical parameter is an emission spectrum, the spectrum may change shape and its emission wavelength maximum shifts. Analogously, in case the optical parameter is a Raman spectrum, scattering intensity gets stronger and/or weaker for different wavenumbers with respect to the reference optical parameter.

According to a further development of the previous embodiments of the invention, the optical signal is recorded at least for a first and a second electrical surface potential applied to the one or more wall portions, particularly wherein the second electrical surface potential has an opposite voltage sign than the first electrical surface potential, wherein the electric charge of the solute or the ionic strength of the solution is determined for the first and the second electrical surface potential, particularly wherein the electric charge or the ionic strength of the solution is determined from a change of the optical parameter determined for the first and the second electric surface potential.

According one embodiment, the one or more wall portions are particularly on the same electrical surface potential at any given time, e.g. either on the first or on the second electrical surface potential.

According one embodiment, the one or more wall portions are particularly on the different electrical surface potentials at any given time, e.g. while one wall portion may be on the first electrical surface potential, the other wall portions is on the second electrical surface potential or vice versa.

This embodiment allows a more robust estimation of the charge of the solute or the ionic strength of the solution, as the solute's distribution is determined for at least two different measurement conditions and a determined average value for the charge of the ionic strength is therefore statistically more accurate.

According to another embodiment of the invention, the optical signal is recorded in a time-resolved fashion, wherein from the time-resolved change of the optical signal and the change of the optical parameter, a diffusion parameter of the solute is obtained, particularly wherein said diffusion parameter is or comprises a diffusion coefficient and/or a hydrodynamic radius of the solute, particularly wherein the diffusion parameter is put out on an interface.

The diffusion parameter is obtained by determining the time the solute's needs to adopt the solute's distribution under the changing electrical surface potential. The longer the time, the larger the hydrodynamic radius of the solute.

According to another embodiment of the invention, the electric surface potential alternates repeatedly between the first and the second surface potential, wherein from a temporal phase shift of the determined optical parameter with regard to the alternating first and second electrical surface potentials, the diffusion parameter is obtained.

This embodiment allows a reliable estimation of the diffusion parameter.

In the following the second variant of the invention is detailed.

According to another embodiment of the invention, the measurement space comprises at least two wall portions, wherein the electrical surface potentials of the two or more wall portions have the same voltage sign, particularly wherein the electrical surface potentials have the same voltage value, wherein method comprises the steps of:

- Flowing the solution with the solute through the measurement space between the at least two wall portions at a flow velocity, wherein the flow is a laminar flow and forms a parabolic flow profile in the measurement space between the at least two wall portions along a flow direction, such that the solute's distribution in the measurement space depends also on the flow;

- wherein the optical parameter is indicative of a spatio-temporal evolution of the solute's distribution in the measurement space at least along the flow direction for at least two time points.

As detailed in previous paragraphs, this embodiment allows determining the electrical charge of the solute or the ionic strength of the solution based on the optical parameter, wherein the optical parameter now comprises an information on the spatio-temporal evolution of the solute's distribution in the measurement space.

Particularly, the optical parameter reflects the spatio-temporal distribution, such that the optical parameter comprises an information on a temporally resolved location / distribution of the optical signal in the measurement space at least along the flow direction.

The spatio-temporal evolution of the solute's distribution may comprise the determination of a drift velocity of the solute.

As the drift velocity of the solute depends on the charge of the particles comprised by the solute, the estimation of the solute's distribution in a spatio-temporally resolved fashion allows to determine the drift velocity or related parameters. From the drift velocity or related parameters, such as the spatio-temporal distribution of the solute, the charge of the solute or the ionic strength may be determined.

In contrast to the first variant of the invention, this embodiment, i.e. the second variant, allows distinguishing different kinds of particles, wherein the different kinds of particles bear different charge. Further, this embodiment allows quantifying the electrical charge of the kinds of particles comprised by the solute.

This is due to the fact that particles with different electrical charge exhibit different drift velocities. That is, over time, particles having different charge separate along the direction of the flow, assuming they enter the measurement space at the same location and time with regard to the flow direction.

The term 'evolution' particularly refers to the entirety of adopted and measured states of the solute at the at least two time points, wherein a state is a combination of a position at least along the flow direction and an associated time.

According to another embodiment of the invention, the measurement space is comprised in a channel, enclosing the solution and the flow, wherein said channel comprises a channel wall with the one or more wall portions.

The channel may be formed from glass. A cross-section of the channel orthogonal to the flow direction may be circular, elliptical, oval or polygonal, such as rectangular.

According to another embodiment of the invention, in case a concentration of the particles in the solution is in the single-molecule regime, particularly such that a location of single particles of the solute can be measured spatially resolved for at least two time points, preferably for a plurality of time points, for each particle a spatio-temporal evolution can be determined. From this spatio-temporal evolution of the single particle(s), i.e. the plurality of measured positions at different time points, an average drift velocity of the particle(s) may be determined, which allows the determination of the charge of the particle(s) individually. The spatio-temporal evolution of the solute is therefore the spatio-temporal evolution of all measured particles of the solute.

According to another embodiment of the invention, in case the concentration of the particles is too high to spatially resolve the particles, i.e. the concentration is not in the single-molecule regime, the solute is injected at a first location in the measurement space at a first time point. Particularly, at the injection time point the solute's distribution in the measurement space adopts a spatially confined configuration at least along the flow direction having only one concentration peak. Particularly, the injection time point is so short that a width, particularly a half-width at full maximum of the distribution over the time interval of the injection is less than 0.3 mm, particularly less than 0.1 mm.

The solute's distribution according to this embodiment is then recorded by means of recording the optical signal at a second time point, wherein the distribution exhibits at least one concentration peak along the flow direction, wherein from a distance of the at least one peak to the first location a drift velocity may be determined. As elaborated above, the drift velocity is related to the charge of the particles and thus the charge may be determined.

Thus, in case the solute's distribution comprises two or more peaks at the second time point, each peak may be related to a kind of particle of the solute having a different charge. From the drift velocity the absolute charge value(s) can be determined.

It is noted that the spatio-temporal evolution of the solute's distribution in this case corresponds the spatio-temporal evolution of the concentration of the solute in the measurement space.

The term 'drift velocity' particularly refers to the average drift velocity of the solute or individual particles of the solute along the flow direction.

Similarly, the term 'flow velocity' particularly refers to the average flow velocity of the solution along the flow direction.

According to another embodiment of the invention, the drift velocity is measured relative to the average flow velocity of the parabolic flow.

According to another embodiment of the invention, in case the charge of the at least one kind of particles of the solute is to be determined, the electric charge is determined for each different kind of particle in the solute from the spatio-temporal evolution of the solute's distribution individually.

Further to the determination of the charge, this embodiment allows a separation of particles based on their charge.

For separating the particles of different charge, the method may comprise an ejector device that ejects different portions of the flow into different sample volumes or sample containers, wherein each portions comprises a different kind of particles.

According to another embodiment of the invention, the optical signal is an optical signal that is spatially resolved in the measurement space at least along the flow direction, such that the optical parameter is spatially resolved for determining the spatio-temporal evolution of the solute's distribution.

According to another embodiment of the invention, the solute's distribution comprises one or more peaks at least one of the two time points, wherein each peak is associated to one kind of particles bearing the same charge, wherein for at least the second time point of the at least two time points a position of each peak along the flow direction is determined from the optical parameter, wherein the ionic strength of the solution or the charge of each of the at least one kind of particles in the solute is determined by relating either the position at the second time point, e.g. relative to a start position at a first time point, or a drift velocity determined from a distance the between the peaks at the first and the second time point of the at least two time points to the ionic strength or the charge of the at least one kind of particle respectively.

According to another embodiment of the invention, in case the charge of the solute is to be determined, the solute comprises at least one kind of test particles for which the electric charge is to be determined, and in addition comprises at least one kind of reference particles bearing a predefined reference charge, e.g. neutral charge and/or multiple integer charges of 1e or even fractional charges, e.g. due to charge shielding effects, in the solution, wherein the electric charge of the at least one kind of test particles is determined in relation to and from the spatio-temporal evolution of the solute's distribution of the at least one kind of reference particles.

This embodiment allows interpolating the charge(s) of the test particles based on their relative position with regard to the position(s) of the reference particle(s), or based on the measured drift velocity (e.g. in the single-molecule regime).

According to another embodiment of the invention, the reference particles comprise at least one kind of uncharged, i.e. neutrally charged, particles, wherein form the drift velocity of the said uncharged particles the average flow velocity is determined.

According to another embodiment of the invention, the reference particles comprise at least three different kinds of particles each kind having a known charge in the solution. This allows a reliable interpolation for the test particles.

According to another embodiment of the invention, the solute comprises several kinds of reference particles, each kind of reference particle bearing a different reference charge, wherein the electric charge of the at least one kind of test particles is determined in relation to the solute's distribution of the several kinds of reference particles, particularly wherein the optical signal from the reference particles is separable from the optical signal of the test particles, e.g. by means of a emission wavelength or a luminescence lifetime.

According to another embodiment of the invention, a concentration of the solute is adjusted such that the at least one measurement resolves individual particles of the solute, particularly test and reference particles, wherein the spatio-temporal evolution of the solute's distribution is determined for each particle separately, such that for each particle the charge can be or is determined.

According to a second aspect of the invention, a system is disclosed, wherein the system is configured to measure the charge of a solute or the ionic strength of the solution according to the method and wherein the system comprises at least the features of claim 13.

The computer may be connected to the detector, the recording electronics, the injector, the flow generating device, the illumination source, such as to control and communicate with these components. A computer having the computer program stored thereon is configured and adapted to execute the method according to the invention.

The system may further be characterized in that the measurement space comprises at least two wall portions that are arranged opposite and parallel at a constant distance to each other, wherein along at least one direction parallel to the wall portions, the measurement space is at least 100 times greater than the distance of the wall portions, wherein the wall portions comprise an electrically conductive layer.

According to a third aspect of the invention, a computer program product comprising computer program code stored on a non-transitory medium is disclosed, as defined by claim 14.

Particularly, exemplary embodiments are described below in conjunction with the Figures. The Figures are appended to the claims and are accompanied by text explaining individual features of the shown embodiments and aspects of the present invention.

Fig. 1     shows a schematic cross-section through a measurement space and a solute's distribution under an externally applied electric field without flow with two wall portions;

Fig. 2     shows a diagram of the dependency of the optical parameter from the applied surface potential - theory and experiment;

Fig. 3     shows a schematic cross-section through a measurement space and a solute's distribution under an externally applied electric field without flow with one wall portion;

Fig. 4     shows a second variant of the invention where a laminar parabolic flow is applied to the measurement space for two situations;

Fig. 5     shows a diagram illustrating the spatio-temporal evolution of the solute's distribution;

Fig. 6     shows a diagram illustrating the separation of different kinds of particles;

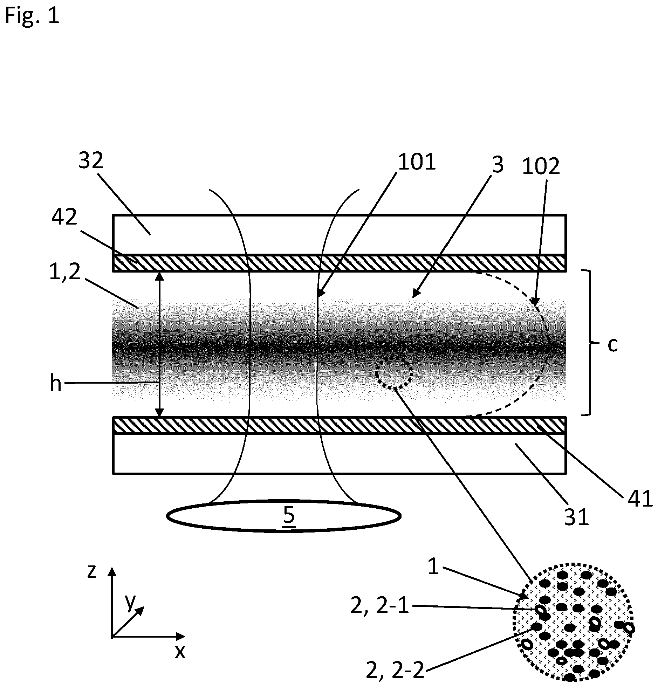

In Fig. 1, an example for executing the first variant of the invention is schematically illustrated. The ionic aqueous solution 1 comprising the solute 2, 2-1, 2-2 is arranged in a measurement space 3 comprised between two wall portions 31, 32. The wall portions are flat and face each other. Without restriction to generality, it is assumed that the wall portions 31, 32 are arranged at a distance h to each other, wherein said distance h extends along a z-axis of a Cartesian coordinate system (depicted with three axes labeled with x, y, and z in Fig. 1). The measurement space 3 extends radially around the z-axis, along the x- and y-direction. In the example, the wall portions 31, 32 are arranged parallel to each other, which however, is not a necessity. The wall portions 31, 32 may form a tunnel or a funnel-like measurement space 3 or may be tilted around the y-axis such that the distance h of the wall portions 31, 3,2 changes (only) along the x-axis. The distance h between the two wall portions 31, 32 may be in the range from 10 nm to 1000 nm, particularly from 100 nm to 300 nm.

On the side of the wall portions 31, 32 facing toward the solution, an electrically conductive layer 41, 42 is arranged on each wall portion 31, 32.

The layers 41, 42 may for example be gold layers. The layers 41, 42 serve two purposes: A first purpose is to facilitate an electrical surface potential, that may be generated by applying a voltage to the electrically conductive layers 41 42. The second purpose is to provide a means for the particles 2-1, 2-2 to electromagnetically couple to the layers 41, 42, particularly to the local density of states, such as that the optical signal of the particles 2-1, 2-2 becomes distance sensitive to the layers 41, 42.

For example, it is known that the fluorescence lifetime of molecules may become shorter, the closer the molecule gets to the layer 41, 42. Similarly, the emission spectrum of fluorescent molecules shifts in depending on a distance to the layer 41, 42.

The electrical surface potential may be induced by means of a voltage generator (not shown) connected to the electrically conductive layers 41, 42.

The electrical surface potential of both layers 41, 42 is of the same value. The electrical surface potentials may be in the range of -2 V to 2 V.

The layers 41, 42 each may have a thickness i.e. an extent along the z-axis, in the range of 1 nm to 100 nm, particularly in the range of 10 nm to 50 nm. The layers 41, 42 are therefore at least partially transparent. The measurement space at these dimensions forms a nanocavity for the particles, wherein the optical properties of the particles 2-1, 2-2 may be changed due to the cavity size depending on their distance to the cavity walls 41, 42.

In the example, the solute 2 comprises two kinds of charged particles 2-1, 2-2 (shown as an enlarged portion in Fig. 1 as black or white circles) that are for example labelled with an organic fluorophore and thus give rise to an optical signal, namely fluorescence, upon illumination 101 with light. In Fig. 1, the light 101 is focused in the measurement space 3 by means of a lens 5 and illuminates a small portion of the measurement space 3, particularly only a pico- to femtoliter sized volume. Fluorescence from the solute 2 may be collected by the same lens 5 and detected by a detector (not shown) as well as recorded by appropriate electronics (not shown). The measurement may be performed on an optical microscope.

The optical parameter may be the fluorescence lifetime associated to the optical signal of the solute 2.

When the electrical surface potential is applied to both wall portions/layers 41, 42, the solute's spatial distribution c changes from a homogenous and evenly distributed configuration to an uneven distribution. The latter situation is depicted in Fig. 1. The concentration c of the solute 2, i.e. the solute's distribution c, is highest (indicated by darker values of the gray scale value) at locations in the measurement space that are equally far away from the electrically conductive layers 41, 42, i.e. in the center of the measurement space 3.

This is due to the fact, that the electrical surface potential has equal values on both layers 41, 42, and because the charge of the solute 2 has the same sign as the electrical surface potential, which leads to a repulsive force on the charged particles 2-1, 2-2 of the solute 2. Obviously, the force is stronger the higher the charge of the particle is.

Depending on the concentration c of the solute 2, the solute's distribution may be also understood as a probability distribution of single particles of the solute 2.

In any case, the particles 2-1, 2-2 closer to the layers 41, 42 will experience a stronger coupling to the local density of modes, wherein the particles further away will couple less strong. The different coupling strength in turn will result in an optical signal that is sensitive to the distance of the particle to the layers 41, 42 as elaborated in previous paragraphs.

From the recorded optical signal, the optical parameter is determined that is indicative for the solute's distribution c, i.e. the distances of the particles 2-1, 2-2 to the layers 41, 42 in the measurement space 3.

In case the optical parameter is the fluorescence lifetime, the optical parameter consists of a plurality of lifetimes that are superimposed, wherein each lifetime essentially reflects a distance to the layers 41, 42.

Now, as the factors influencing the solute's distribution are the ionic strength (which provides a charge shielding effect to the solute), and the electrical surface potential, as well as the charge of the solute 2, knowing the ionic strength, the electrical surface potential and the solute's distribution c allows to determine the charge of the solute 2. From the optical parameter the information about the solute's distribution c may be obtained.

Factors that may also affect the solute's distribution c are readily known, such as the material of the electrically conductive layer (which influences the local density of modes and the coupling to these modes), and/or the temperature of the solution.

With a boundary condition of the electrical surface potential $\psi_0$ having the same value at the layers 41, 42, the Poisson-Boltzmann equation provides the analytical solution for the electrical potential in the solution (depicted as broken line 102 across the measurement space):

$$\psi(z) = \psi_0 \frac{\cosh(\kappa z)}{\cosh(0.5\,\kappa h)} \qquad \text{(Eq. 1)}$$

wherein $\psi(z)$ (102) is the electrical potential in the solution along the z-axis, wherein $\kappa$ is the Debye length, which depends on the ionic strength, and wherein $h$ is the distance of the two layers.

The solute's distribution $c(z)$ (depicted as gray values) along the z-axis is given by:

$$c(z) = \exp\left(-\frac{q\psi(z)}{k_B T}\right) \qquad \text{(Eq. 2)}$$

wherein $q$ is the charge of the solute 2, and $k_B T$ is the Boltzmann constant times the temperature of the solution 1.

It has been shown in several publications how optical parameters of the particles 2-1, 2-2 depend on a distance to an electrically conductive layer in case of a coupling to the local density of modes. Therefore, by relating the optical parameter consisting of a distribution of optical parameters from single particles sampling different distances to the layers in the measurement space, to the underlying solute's distribution, it is possible to very accurately determine the charge of the solute. It is noted that, as the particles are not individually resolvable by the measurement, the determined charge is an average charge of the solute 2.

It is clear, that for a different wall portion geometry and thus a different layer geometry, the electrical potential in the measurement space changes, but can be oftentimes analytically solved or at least numerically estimated.

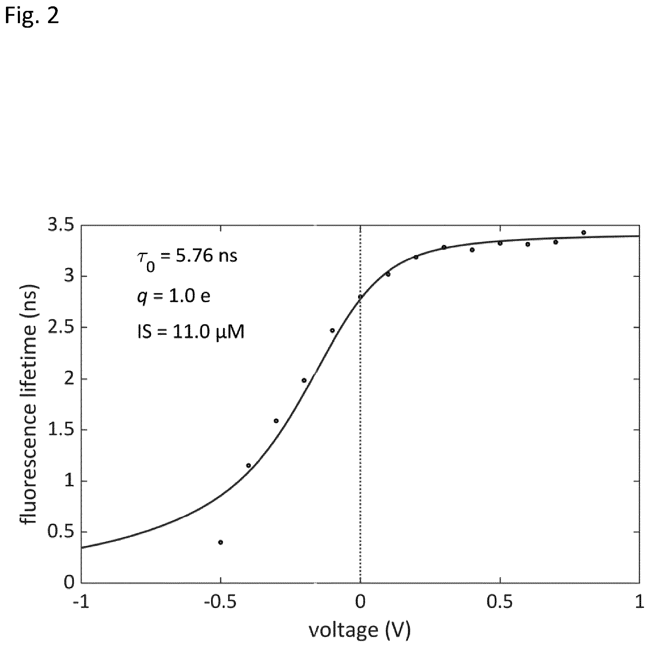

In Fig. 2 the dependency of the optical parameter in form of the fluorescence lifetime is plotted versus the electrical surface potential ('voltage') for a measurement space having two opposing wall portions each having a gold layer arranged thereon, wherein the distance between the layers is 260 nm. The solution had an ionic strength of 11 $\mu$M and the particles of the solute had a charge of +1.0e.

The solid line in the graph is the theoretically predicted fluorescence lifetime, for any given electrically surface potential, wherein the circles depict the measured fluorescence lifetime. The exceptionally good correspondence indicates the validity of the method.

As the electrical surface potential increases to positive values the particles due to their positive charge adopt increasing distances to the layers, such that the lifetime becomes longer. In turn, when the electrical potential adopts the opposite value (-V) than the particles' charge (1e), the particles are pulled toward the layers, which results in a shortening of the lifetimes due to a stronger coupling to the layers.

From this example it becomes evident that the method may be applied for determining the electrical charge of the solute or for determining the ionic strength of the solute equivalently. For different charges of the solute, the lifetime vs the applied voltage exhibits a flatter or steeper dependency on the applied voltage, such that the slope of the lines in the region around 0 V will change, which in turn allows a distinction between solutes of different charge.

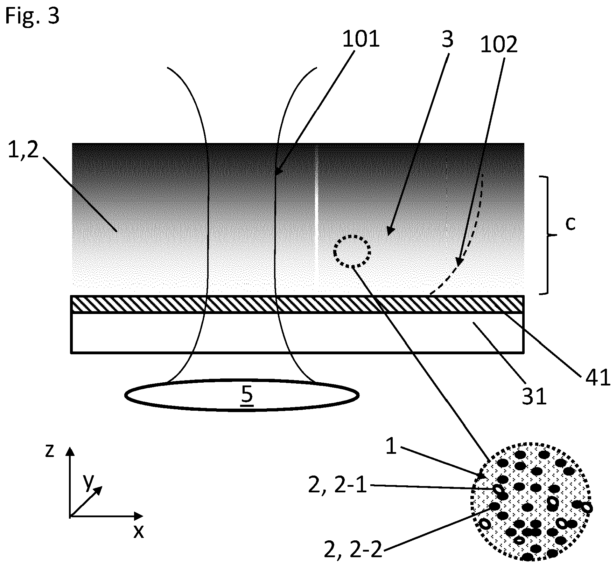

In Fig. 3 a similar measurement space 3 is shown as in Fig. 1. With the difference that only one wall portion 31 is present and the measurement space 3 is open along the z-axis. While the electrical potential 102 in the solution 1 adopts a different shape (as compared to Fig. 1) and the measured optical signal consequently reflects the distance dependency in a different manner, it is nonetheless possible to extract the solute's distribution c along the z-axis, by means of determining the optical parameter as described in previous paragraphs correspondingly with adjusted expressions.

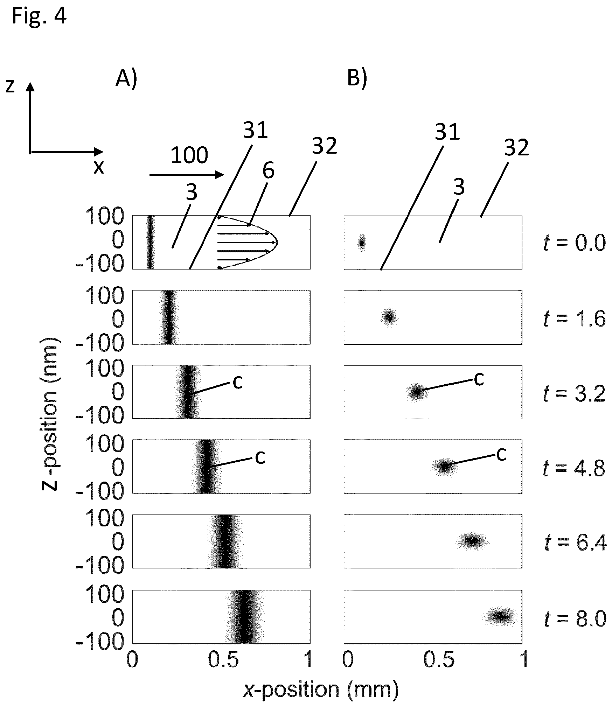

In Fig. 4 the second variant of the invention is depicted. The method according to the second variant is executed in a measurement space having two parallel wall portions 31, 32 (e.g. cf. Fig. 4 at z-positions -100 nm and 100 nm). The wall portions 31, 32 are arranged in a distance that allows the formation of a parabolic and laminar flow 6 in the measurement space, here e.g. 200 nm.

According to the second variant, the flow is applied by means of a pressure difference. The parabolic flow profile 6 as indicated by reference numeral 6 shows the flow velocity in dependency to the distance to the wall portions 31, 32. In the center of the measurement space 3, the flow velocity is greatest, wherein toward the wall portions it becomes slower in a parabolic fashion.

Without loss of generality, it is assumed that the optical signal is a fluorescence signal and that the optical parameter is the signal intensity, e.g. the number of detected photons per time. The optical signal is recorded spatially resolved at least along the flow direction 100 (in Fig. 4 along the x-axis).

In the left column - panel A) - of Fig. 4 a situation is depicted in which the solute 2 comprises one kind of charged particles, while no electrical surface potential is applied to the two wall portions 31, 32.

In the right column - panel B) - of Fig. 4, the distribution of the same solute is shown under the influence of an electrical surface potential that has the same sign as the particles charge.

In both columns - A) and B) - of Fig. 4, the solute's distribution c is resolved by means of the optical parameter along the x- and z-axis (the latter being the flow direction 100) for illustrative purposes.

In the rows of Fig. 4, the solute's distribution c in the measurement space is shown for different time points.

In the first uppermost row (t = 0.0 s), the solute has been just injected to the measurement space 3.

In case of the absence of the electrical surface potential (left column), the particles in the solution undergo diffusion and are transported by the flow. The diffusion over the length (along z-axis) of 200 nm is so fast that the flow velocity profile is averaged out of the solute's distribution c. The solute's distribution c broadens along the x-axis over time (subsequent rows in Fig. 4), wherein the peak of the distribution moves with the (spatially) averaged flow velocity of the flow. That is, the drift velocity of the particles equals the flow velocity of the flow.

Thus, the spatio-temporal evolution of the solute's distribution is described by diffusion and the average flow speed.

From the broadening along the x-axis, the diffusion coefficient of the solute may be obtained.

In case of the presence of the electrical surface potential (right column), the electrical potential immediately exerts a focusing effect on the solute toward the center of the measurement space 3, as the particles experience the repulsive force of the electric potential. In addition to the focusing effect of the solute toward the center, the electrical surface potential also effects an increased drift velocity of the solute's particles along the flow direction as can be seen by comparison between the left and right column. The increased drift velocity depends on the charge of the solute.

In Fig. 4, the charge of the solute has been assumed to be 1e. The surface potential is set to 1V. The Debye-length has been adjusted to 45 nm from which a corresponding ionic strength may be calculated.

The solute's distribution $c(x, z, t)$ for a time $t$ in the measurement space may be expressed as:

$$c(x, z, t) = \frac{1}{\sqrt{2\pi\sigma^2(t)}} \exp\left\{-\frac{[x-\bar{x}(t)]^2}{2\sigma^2(t)} - \mu\psi(z)\right\}, \qquad \text{(Eq. 3)}$$

with $\bar{x}(t) = x_0 + u_{drift} \cdot t$, and $\sigma^2(t)$ being related to the broadening of the concentration due to diffusion, $\mu = \frac{q}{k_B T}$ depending on the charge the solute, and $\psi(z)$ being the electrical potential in the solution, as elaborated for example in Eq. 1. Further, $u_{drift} = \langle u \rangle_{\psi(z)}$, wherein the angular brackets denote the weighted average (Eq. 4):

$$\langle u \rangle_{\psi(z)} = \int_{-0.5h}^{0.5h} dz\, e^{-\mu\psi(z)} u(z) \Big/ \int_{-0.5h}^{0.5h} dz\, e^{-\mu\psi(z)}$$

wherein $h$ denotes the distance of the wall portions/ electrically conductive layers.

As can be seen, the drift velocity $u_{drift}$ depends on the electrical potential in the solution (and thus the electrical surface potential and the ionic strength of the solution), and wherein a width of the concentration distribution, i.e. the solute's distribution in the measurement space depends on the diffusion properties, such as the diffusion coefficient of the particles.

The dependency of the drift velocity of the charged particles on the electrical surface potential and the ionic strength of the solution allows the method according to the second variant to even separate different kinds of particles according to their charge. The higher the charge of the particles, the faster the drift velocity.

Therefore, observing the spatio-temporal evolution of the solute's distribution allows separating and identifying different kinds of particles in the solute.

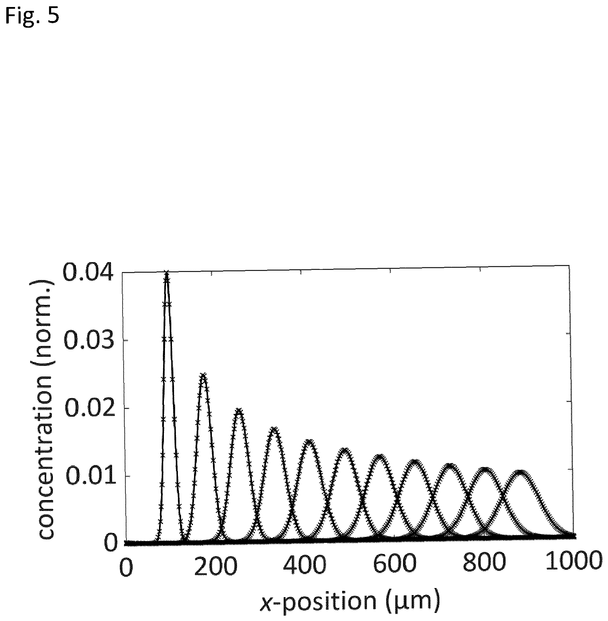

For a solute comprising only one kind of particles, the spatio-temporal evolution of the solute's distribution is depicted in Fig. 5.

Fig. 5 shows the solute's distribution of the solute of the right column of Fig. 4 (concentration) for the same time points of Fig. 4 with respect to the position along the x-axis.

The crosses depict the distribution as expected according to equation Eq. 3.

It can be seen that from the temporal evolution of the peaks of the solute's distribution and from the flow velocity, the charge of the particles may be determined.

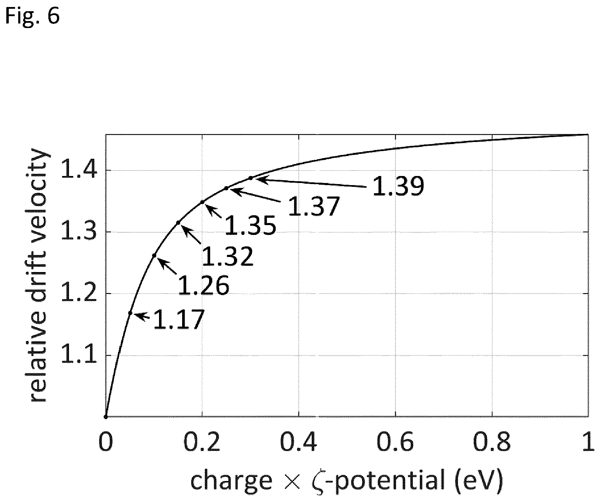

In Fig. 6 it is demonstrated that it is possible to separate a solute comprising a plurality of different kinds of particles by way of the second variant of the method and to determine their charge.

Fig. 6 depicts the relative drift velocity $R = \frac{u_{drift}}{\bar{u}}$ as a function of the product of charge of the particle and the electrical surface potential for a width (i.e. distance of the measurement space) of 200 nm and a Debye length of 30 nm. The relative drift velocity is the drift velocity divided by the average flow velocity $\bar{u}$.

The annotated five values are the relative drift velocities for particles of the solute having 1 to 6 elementary charges at a surface potential of 50 mV on the wall portions. The higher the charge the greater the relative drift velocity.

References

[1] Calin Plesa, Stefan W Kowalczyk, Ruben Zinsmeester, Alexander Y Grosberg, Yitzhak Rabin, and Cees Dekker. "Fast translocation of proteins through solid state Nanopores". Nano letters, 13(2): 658-663, 2013.

[2] Kevin J Freedman. :Maike Jürgens, Anmiv Prabhu, Chi Won Ahn, Per Jemth, Joshua B Edel, and Min Jun Kim. "Chemical, thermal, and electric field induced unfolding of single protein molecules studied using nanopores". Analytical chemistry, 83(13):5137- 5144, 2011.

[3] Madhavi Krishnan, et al "Geometry-induced electrostatic trapping of nanometrixc objects in a fluid" Nature,467(7316);692-695, 2010.

[4] Franccsca Ruggeri, et al. "Single-molecule electrometry", Nature Nanotechnology, 12(5) :488-495, 2017.

**Claims**

1. A method for determining a charge of a solute comprising at least one kind of particles in an aqueous solution or for determining an ionic strength of a solution, the method comprising the steps of:

   - Arranging an aqueous solution (1) with an ionic strength, wherein the solution (1) comprises the solute (2) with the at least one kind of particles (2-1, 2-2) in a measurement space (3), wherein the measurement space (3) is limited by one or more wall portions (31, 32) exhibiting an electrical surface potential, causing the solute (2, 2-1, 2-2) to adopt a solute's distribution (c) in the measurement space (3);
   - Recording an optical signal from the solute (2, 2-1, 2-2), the signal being sensitive to the solute's distribution (c) in the measurement space (3);
   - Determining an optical parameter from the recorded optical signal, the optical parameter being indicative of the solute's distribution (c) in the measurement space (3);
   - Determining from the optical parameter, from the electrical surface potential and further

      a) from the ionic strength of the solution (1), the charge of the solute, or
      b) from the charge of the solute (2, 2-1, 2-2), the ionic strength of the solution (1), **characterized in that** the one or more wall portions (31,32) each comprise an electrically conductive layer, wherein the optical signal of the solute is distance-sensitive to an electromagnetic field coupling of the solute and the electrically conductive layer of the one or more wall portions, such that the optical parameter is indicative of a distance distribution of the solute and/or
      **characterized in that**
      the measurement space (3) comprises two parallel wall portions (31, 32) that are arranged in a distance that allows the formation of a parabolic and laminar flow (6) in the measurement space, wherein said flow (6) is applied by means of a pressure difference.

2. The method according to claim 1, wherein the optical signal is a luminescence signal or a Raman signal.

3. The method according to claim 2, wherein the optical parameter is at least one of:

   - a luminescence lifetime of the optical signal,
   - a luminescence intensity or a plurality of luminescence photons,
   - a polarization of the optical signal,
   - a wavelength of the optical signal,
   - a spectrum of the optical signal, such as a fluorescence lifetime spectrum, a Raman spectrum or a steady state spectrum, and/or
   - an interference scattering.

4. The method according to one of the preceding claims, wherein an optical reference parameter is acquired that reflects the optical parameter in the absence of the electromagnetic field coupling, wherein the electric charge (q) of the solute (2) or the ionic strength of the solution (1) is determined by further relating the optical parameter to the optical reference parameter.

5. The method according to one of the preceding claims, wherein the optical signal is recorded for a first and a second electrical surface potential, wherein the electric charge of the solute (2) or the ionic strength of the solution (1) is determined for the first and the second electrical surface potential.

6. The method according to claim 5, wherein the optical signal is recorded in a time-resolved fashion, wherein from the change of the optical signal and the optical parameter, a diffusion parameter of the solute (2) is obtained.

7. The method according to claim 6, wherein the electric surface potential alternates repeatedly between the first and the second surface potential, wherein from a phase shift of the optical parameter with regard to the alternating first and second electrical surface potentials, the information on the diffusion parameter is obtained.

8. The method according to any of the preceding claims, wherein the measurement space comprises at least two wall portions (31, 32), wherein the electrical surface potentials of the two or more wall portions (31, 32) have the same voltage sign, wherein method comprises the steps of:

- Flowing the solution (1) with the solute (2, 2-1, 2-2) through the measurement space (3) at a flow velocity, wherein the flow is a laminar flow and forms a parabolic flow profile (5) in the measurement space (3) between the at least two wall portions (31, 32) along a flow direction (100), such that the solute's distribution depends also on the flow;
- wherein the optical parameter is indicative of a spatio-temporal evolution of the solute's distribution (c) in the measurement space (3) at least along the flow direction for at least two time points.

9. The method according to claim 8, wherein the optical signal is an optical signal that is spatially resolved in the measurement space at least along the flow direction, such that the optical parameter is spatially resolved for determining the spatio-temporal evolution of the solute's distribution (c).

10. The method according to any of the claims 8 or 9, wherein the solute's distribution (c) comprises one or more peaks at least one of the two time points, wherein each peak is associated to one kind of particles (2-1, 2-2) bearing the same charge, wherein for at least the second time point of the at least two time points a position of each peak along the flow direction is determined from the optical parameter, wherein the ionic strength of the solution or the charge of each of the at least one kind of particles in the solute is determined by relating either the position at the second time point or a drift velocity determined from a distance the between the peaks at the first and the second time point of the at least two time points to the ionic strength or the charge of the at least one kind of particle respectively.

11. The method according to any of the claims 9 to 10, wherein in case the charge (q) of the solute (2) is to be determined, the solute (2) comprises at least one kind of test particles (2-1, 2-2) for which the electric charge is to be determined, and in addition comprises at least one kind of reference particles bearing a predefined reference charge in the solution, wherein the electric charge of the at least one kind of test particles is determined in relation to the solute's distribution of the at least one kind of reference particles.

12. The method according to any of the claims 8 to 11, wherein a concentration of the solute (2) is adjusted such that the at least one measurement resolves individual particles of the solute (2), wherein the spatio-temporal evolution of the solute's distribution is determined for each particle separately, such that for each particle the charge can or is determined.

13. A system for measuring the charge of a solute or a ionic strength of a solution (1) according to the method of any of the preceding claims, the system comprising at least the following components:

- a measurement space (3) with one or more wall portions (31, 32) configured to be set to an electrical surface potential;
- a lens (5) arranged and configured to collect the optical signal of the solute (2);
- a detector arranged on configured to detect the optical signal collected by the lens (5);
- a recording electronics configured to record the detected signal from the detector;
- an illumination source for illuminating the solute (2) in the measurement space (3);
- a computer configured and arranged to determine the optical parameter from the recorded signal and to determine the electric charge (q) of the at least one kind of particles (2-1, 2-2) of the solute (2);
- an interface configured and arranged to put out the determined charge (q) of the at least one kind of particles of the solute.

14. A computer program product comprising computer program code stored on a non-transitory medium, wherein when the computer program code is executed on the computer of the system according to claim 13, the system causes the components of the system to execute a method for determining a charge of a solute comprising at least one kind of particles in an aqueous solution arranged in the measurement space or for determining an ionic strength of a solution arranged in the measurement space, the aqueous solution having a ionic strength and comprising the solute with at least one kind of particles, the method comprising the steps of:

- Setting the one or more wall portions (31, 32) to an electrical surface potential, causing the solute (2, 2-1, 2-2) to adopt a solute's distribution (c) in the measurement space (3);
- Recording an optical signal from the solute (2, 2-1, 2-2), the signal being sensitive to the solute's distribution (c) in the measurement space (3);
- Determining an optical parameter from the recorded optical signal, the optical parameter being indicative of the solute's distribution (c) in the measurement space (3);
- Determining from the optical parameter, from the electrical surface potential and further

a) from the ionic strength of the solution (1), the charge of the solute, or
b) from the charge of the solute (2, 2-1, 2-2), the ionic strength of the solution (1), **characterized in that** the one or more wall portions (31,32) each comprise an electrically conductive layer, wherein the optical signal of the solute is distance-sensitive to an electromagnetic field coupling of the solute and the electrically conductive layer of the one or more wall portions, such that the optical parameter is indicative of a distance distribution of the solute and/or
**characterized in that**
the measurement space (3) comprises two parallel wall portions (31, 32) that are arranged in a distance that allows the formation of a parabolic and laminar flow (6) in the measurement space, wherein said flow (6) is applied by means of a pressure difference.

**Patentansprüche**

1. Verfahren zur Bestimmung der Ladung eines gelösten Stoffes, der mindestens eine Art von Partikeln in einer wässrigen Lösung enthält, oder zur Bestimmung der Ionenstärke einer Lösung, wobei das Verfahren die folgenden Schritte umfasst:

- Anordnen einer wässrigen Lösung (1) mit einer Ionenstärke, wobei die Lösung (1) den gelösten Stoff (2) mit der mindestens einen Art von Partikeln (2-1, 2-2) in einem Messraum enthält (3), wobei der Messraum (3) durch einen oder mehrere Wandabschnitte (31, 32) begrenzt ist, die ein elektrisches Oberflächenpotential aufweisen, wodurch der gelöste Stoff (2, 2-1, 2-2) eine Verteilung (c) im Messraum (3) annimmt;
- Erfassen eines optischen Signals von dem gelösten Stoff (2, 2-1, 2-2), wobei das Signal empfindlich gegenüber der Verteilung (c) des gelösten Stoffes im Messraum (3) ist;
- Bestimmen eines optischen Parameters aus dem aufgezeichneten optischen Signal, wobei der optische Parameter die Verteilung (c) des gelösten Stoffes im Messraum (3) anzeigt;
- Bestimmen aus dem optischen Parameter, aus dem elektrischen Oberflächenpotential und ferner

a) aus der Ionenstärke der Lösung (1), die Ladung des gelösten Stoffes oder
b) aus der Ladung des gelösten Stoffes (2, 2-1, 2-2), die Ionenstärke der Lösung (1), **dadurch gekennzeichnet, dass**
der eine oder die mehreren Wandabschnitte (31, 32) jeweils eine elektrisch leitfähige Schicht umfassen, wobei das optische Signal des gelösten Stoffes distanzempfindlich gegenüber einer elektromagnetischen Feldkopplung des gelösten Stoffes und der elektrisch leitfähigen Schicht des einen oder der mehreren Wandabschnitte ist, so dass der optische Parameter eine Abstandsverteilung des gelösten Stoffes anzeigt und/oder
**dadurch gekennzeichnet, dass**
der Messraum (3) zwei parallele Wandabschnitte (31, 32) umfasst, die in einem Abstand angeordnet sind, der die Bildung einer parabolischen und laminaren Strömung (6) im Messraum ermöglicht, wobei die Strömung (6) mittels einer Druckdifferenz erzeugt wird.

2. Verfahren nach Anspruch 1, wobei das optische Signal ein Lumineszenz-Signal oder ein Raman-Signal ist.

3. Verfahren nach Anspruch 2, wobei der optische Parameter mindestens einer der folgenden ist:

- eine Lumineszenzlebensdauer des optischen Signals,
- eine Lumineszenzintensität oder eine Vielzahl von Lumineszenzphotonen,
- eine Polarisation des optischen Signals,
- eine Wellenlänge des optischen Signals,
- ein Spektrum des optischen Signals, wie beispielsweise ein Fluoreszenzlebensdauerspektrum, ein Raman-Spektrum oder ein stationäres Spektrum, und/oder
- eine Interferenzstreuung.

4. Verfahren nach einem der vorstehenden Ansprüche, wobei ein optischer Referenzparameter erfasst wird, der den optischen Parameter ohne die Kopplung des elektromagnetischen Feldes widerspiegelt, wobei die elektrische Ladung (q) des gelösten Stoffes (2) oder die Ionenstärke der Lösung (1) bestimmt wird, indem der optische Parameter weiter mit dem optischen Referenzparameter in Beziehung gesetzt wird.

5. Verfahren nach einem der vorstehenden Ansprüche, wobei das optische Signal bei einem ersten und einem zweiten elektrischen Oberflächenpotential aufgezeichnet wird, wobei die elektrische Ladung des gelösten Stoffes (2) oder die Ionenstärke der Lösung (1) für das erste und das zweite elektrische Oberflächenpotential bestimmt wird.

6. Verfahren nach Anspruch 5, wobei das optische Signal zeitaufgelöst aufgezeichnet wird, wobei aus der Änderung des optischen Signals und des optischen Parameters ein Diffusionsparameter des gelösten Stoffes (2) ermittelt wird.

7. Verfahren nach Anspruch 6, wobei das elektrische Oberflächenpotential wiederholt zwischen dem ersten und dem zweiten Oberflächenpotential wechselt, wobei aus einer Phasenverschiebung des optischen Parameters in Bezug auf das wechselnde erste und zweite elektrische Oberflächenpotential die Information über den Diffusionsparameter ermittelt wird.

8. Verfahren nach einem der vorstehenden Ansprüche, wobei der Messraum mindestens zwei Wandabschnitte (31, 32) umfasst, wobei die elektrischen Oberflächenpotentiale der zwei oder mehr Wandabschnitte (31, 32) das gleiche Spannungszeichen aufweisen, wobei das Verfahren die folgenden Schritte umfasst:

   - Durchströmen des Messraums (3) mit der Lösung (1) mit dem gelösten Stoff (2, 2-1, 2-2) mit einer Strömungsgeschwindigkeit, wobei die Strömung eine laminare Strömung ist und im Messraum (3) zwischen den mindestens zwei Wandabschnitten (31, 32) entlang einer Strömungsrichtung (100) ein parabolisches Strömungsprofil (5) bildet, so dass die Verteilung des gelösten Stoffes auch von der Strömung abhängt;
   - wobei der optische Parameter eine räumlich-zeitliche Entwicklung der Verteilung des gelösten Stoffes (c) im Messraum (3) zumindest entlang der Strömungsrichtung für mindestens zwei Zeitpunkte angibt.

9. Verfahren nach Anspruch 8, wobei das optische Signal ein optisches Signal ist, das im Messraum zumindest entlang der Strömungsrichtung räumlich aufgelöst ist, so dass der optische Parameter räumlich zur Bestimmung der räumlich-zeitlichen Entwicklung der Verteilung des gelösten Stoffes (c) aufgelöst ist.

10. Verfahren nach einem der Ansprüche 8 oder 9, wobei die Verteilung (c) des gelösten Stoffes an mindestens einem der beiden Zeitpunkte einen oder mehrere Peaks aufweist, wobei jeder Peak einer Art von Partikeln (2-1, 2-2) zugeordnet ist, die dieselbe Ladung tragen, wobei für mindestens den zweiten der mindestens zwei Zeitpunkte eine Position jedes Peaks entlang der Strömungsrichtung anhand des optischen Parameters bestimmt wird, wobei die Ionenstärke der Lösung oder die Ladung jeder der mindestens einen Art von Partikeln im gelösten Stoff bestimmt wird, indem entweder die Position zum zweiten Zeitpunkt oder eine aus dem Abstand zwischen den Peaks zum ersten und zum zweiten Zeitpunkt der mindestens zwei Zeitpunkte bestimmte Driftgeschwindigkeit mit der Ionenstärke bzw. der Ladung der mindestens einen Art von Partikeln in Beziehung gesetzt wird.

11. Verfahren nach einem der Ansprüche 9 bis 10, wobei, falls die Ladung (q) des gelösten Stoffes (2) bestimmt werden soll, der gelöste Stoff (2) mindestens eine Art von Testpartikeln (2-1, 2-2) umfasst, für die die elektrische Ladung bestimmt werden soll, und zusätzlich mindestens eine Art von Referenzpartikeln umfasst, die eine vordefinierte Referenzladung in der Lösung tragen, wobei die elektrische Ladung der mindestens einen Art von Testpartikeln in Bezug auf die Verteilung der mindestens einen Art von Referenzpartikeln im gelösten Stoff bestimmt wird.

12. Verfahren nach einem der Ansprüche 8 bis 11, wobei eine Konzentration des gelösten Stoffes (2) so eingestellt wird, dass bei der mindestens einen Messung einzelne Partikel des gelösten Stoffes (2) aufgelöst werden, wobei die räumlich-zeitliche Entwicklung der Verteilung des gelösten Stoffes für jedes Partikel separat bestimmt wird, sodass für jedes Partikel die Ladung bestimmt werden kann oder bestimmt wird.

13. Ein System zur Messung der Ladung eines gelösten Stoffes oder der Ionenstärke einer Lösung (1) gemäß dem Verfahren eines der vorstehenden Ansprüche, wobei das System mindestens die folgenden Komponenten umfasst:

   - einen Messraum (3) mit einem oder mehreren Wandabschnitten (31, 32), die so ausgebildet sind, dass sie auf ein elektrisches Oberflächenpotential eingestellt werden können;
   - eine Linse (5), die so angeordnet und ausgebildet ist, dass sie das optische Signal des gelösten Stoffes (2) erfasst;
   - einen Detektor, der so angeordnet und ausgebildet ist, dass er das von der Linse (5) erfasste optische Signal detektiert;

- eine Aufzeichnungselektronik, die so ausgebildet ist, dass sie das vom Detektor detektierte Signal aufzeichnet;
- eine Beleuchtungsquelle zum Beleuchten des gelösten Stoffes (2) im Messraum (3);
- einen Computer, der so ausgebildet und angeordnet ist, dass er den optischen Parameter aus dem aufgezeichneten Signal bestimmt und die elektrische Ladung (q) der mindestens einen Art von Partikeln (2-1, 2-2) des gelösten Stoffes (2) bestimmt;
- eine Schnittstelle, die so ausgebildet und angeordnet ist, dass sie die bestimmte Ladung (q) der mindestens einen Art von Partikeln des gelösten Stoffes ausgibt.

14. Ein Computerprogrammprodukt, das auf einem nichttransitorischen Speichermedium gespeicherten Computerprogrammcode umfasst, wobei, wenn der Computerprogrammcode auf dem Computer des Systems gemäß Anspruch 13 ausgeführt wird, das System bewirkt, dass die Komponenten des Systems ein Verfahren zur Bestimmung einer Ladung eines gelösten Stoffes, der mindestens eine Art von Partikeln in einer im Messraum angeordneten wässrigen Lösung umfasst oder zur Bestimmung einer Ionenstärke einer im Messraum angeordneten Lösung ausführen, wobei die wässrige Lösung eine Ionenstärke aufweist und den gelösten Stoff mit mindestens einer Art von Partikeln umfasst, wobei das Verfahren die folgenden Schritte umfasst:

- Einstellen der einen oder mehreren Wandabschnitte (31, 32) auf ein elektrisches Oberflächenpotential, wodurch der gelöste Stoff (2, 2-1, 2-2) eine Verteilung (c) im Messraum (3) annimmt;
- Aufzeichnen eines optischen Signals vom gelösten Stoff (2, 2-1, 2-2), wobei das Signal empfindlich gegenüber der Verteilung (c) des gelösten Stoffes im Messraum (3) ist;
- Bestimmen eines optischen Parameters aus dem aufgezeichneten optischen Signal, wobei der optische Parameter die Verteilung (c) des gelösten Stoffes im Messraum (3) anzeigt;
- Bestimmung aus dem optischen Parameter, aus dem elektrischen Oberflächenpotential und ferner

a) aus der Ionenstärke der Lösung (1), die Ladung des gelösten Stoffes oder
b) aus der Ladung des gelösten Stoffes (2, 2-1, 2-2), die Ionenstärke der Lösung (1), **dadurch gekennzeichnet, dass**

der eine oder die mehreren Wandabschnitte (31, 32) jeweils eine elektrisch leitfähige Schicht umfassen, wobei das optische Signal des gelösten Stoffes distanzempfindlich gegenüber einer elektromagnetischen Feldkopplung des gelösten Stoffes und der elektrisch leitfähigen Schicht der einen oder mehreren Wandabschnitte ist, so dass der optische Parameter eine Abstandsverteilung des gelösten Stoffes anzeigt und/oder

**dadurch gekennzeichnet, dass**
der Messraum (3) zwei parallele Wandabschnitte (31, 32) umfasst, die in einem Abstand angeordnet sind, der die Bildung einer parabolischen und laminaren Strömung (6) im Messraum ermöglicht, wobei die Strömung (6) mittels einer Druckdifferenz erzeugt wird.

## Revendications

1. Procédé de détermination de la charge d'un soluté constitué d'au moins un type de particules dans une solution aqueuse ou de détermination de la force ionique d'une solution, le procédé comprenant les étapes qui consistent à :

- Placer une solution aqueuse (1) dotée d'une force ionique, où la solution (1) contient le soluté (2) constitué du au moins un type de particules (2-1, 2-2), dans un espace de mesure (3), l'espace de mesure (3) étant limité par une ou plusieurs parties formant paroi (31, 32) qui présentent un potentiel électrique de surface, poussant le soluté (2, 2-1, 2-2) à adopter une distribution du soluté (c) dans l'espace de mesure (3) ;
- Enregistrer un signal optique à partir du soluté (2, 2-1, 2-2), le signal étant sensible à la distribution du soluté (c) dans l'espace de mesure (3) ;
- Déterminer un paramètre optique à partir du signal optique enregistré, le paramètre optique étant indicatif de la distribution du soluté (c) dans l'espace de mesure (3) ;
- Déterminer, à partir du paramètre optique, à partir du potentiel électrique de surface et également

a) à partir de la force ionique de la solution (1), la charge du soluté ou
b) à partir de la charge du soluté (2, 2-1, 2-2), la force ionique de la solution (1), **caractérisé en ce que**
les une ou plusieurs parties formant paroi (31, 32) comprennent chacune une couche électriquement conductrice, où le signal optique du soluté est sensible à la distance par rapport à un champ électromagnétique qui couple le soluté et la couche électriquement conductrice des une ou plusieurs parties formant paroi, de sorte que le paramètre optique est indicateur d'une distribution de la distance du soluté et/ou

**caractérisé en ce que**

l'espace de mesure (3) comprend deux parties formant paroi parallèles (31, 32) agencées à une distance qui permet la formation d'un flux parabolique et laminaire (6) dans l'espace de mesure, ledit flux (6) étant créé par le biais d'une différence de pression.

2. Procédé selon la revendication 1, où le signal optique est un signal de luminescence ou un signal Raman.

3. Procédé selon la revendication 2, où le paramètre optique est au moins un des suivants :

- durée de vie de la luminescence du signal optique,
- intensité de la luminescence ou pluralité de photons de luminescence,
- polarisation du signal optique,
- longueur d'onde du signal optique,
- spectre du signal optique, par exemple spectre de la durée de vie de la fluorescence, spectre Raman ou spectre à l'état stationnaire et/ou
- diffusion des interférences.

4. Procédé selon l'une quelconque des revendications précédentes, où un paramètre optique de référence est acquis qui reflète le paramètre optique en l'absence du couplage au champ électromagnétique, la charge électrique (q) du soluté (2) ou la force ionique de la solution (1) étant déterminée en reliant également le paramètre optique au paramètre optique de référence.

5. Procédé selon l'une quelconque des revendications précédentes, où le signal optique est enregistré pour un premier et un second potentiels électriques de surface, la charge électrique du soluté (2) ou la force ionique de la solution (1) étant déterminée pour le premier et le second potentiels électriques de surface.

6. Procédé selon la revendication 5, où le signal optique est enregistré de manière résolue en temps, un paramètre de diffusion du soluté (2) étant obtenu à partir du changement du signal optique et du paramètre optique.

7. Procédé selon la revendication 6, où le potentiel électrique de surface alterne de façon répétée entre le premier et le second potentiels de surface, l'information sur le paramètre de diffusion étant obtenue à partir d'un déplacement de phase du paramètre optique par rapport à l'alternance du premier et du second potentiels électriques de surface.

8. Procédé selon l'une quelconque des revendications précédentes, où l'espace de mesure comprend au moins deux parties formant paroi (31, 32), les potentiels électriques de surface des deux ou plus parties formant paroi (31, 32) ayant le même signe de tension, le procédé comprenant les étapes qui consistent à :

- Faire circuler la solution (1) contenant le soluté (2, 2-1, 2-2) au travers de l'espace de mesure (3) à une vitesse d'écoulement, où le flux est un flux laminaire et forme un profil d'écoulement parabolique (5) entre les au moins deux parties formant paroi (31, 32) le long d'une direction d'écoulement (100) dans l'espace de mesure (3), de sorte que la distribution du soluté dépend également du flux ;

où le paramètre optique est indicateur de l'évolution spatio-temporelle de la distribution du soluté (c) dans l'espace de mesure (3) au moins le long de la direction du flux à au moins deux jalons temporels.

9. Procédé selon la revendication 8, où le signal optique est un signal optique qui est spatialement résolu dans l'espace de mesure au moins le long de la direction du flux, de sorte que le paramètre optique est spatialement résolu pour déterminer l'évolution spatio-temporelle de la distribution du soluté (c).

10. Procédé selon l'une quelconque des revendications 8 ou 9, où la distribution du soluté (c) comprend un ou plusieurs pics à au moins un des deux jalons temporels, chaque pic étant associé à un type de particules (2-1, 2-2) portant la même charge, où une position de chaque pic le long de la direction du flux est déterminée à partir du paramètre optique pour au moins le second des au moins deux jalons temporels, où la force ionique de la solution ou la charge de chacun des au moins un type de particules du soluté est déterminée en reliant soit la position au second jalon temporel, soit la vitesse de dérive déterminée sur la base de la distance entre les pics au premier et au second des au moins deux jalons temporels à la force ionique ou à la charge du au moins un type de particules, respectivement.

11. Procédé selon l'une quelconque des revendications 9 à 10 où, dans le cas où la charge (q) du soluté (2) est à déterminer, le soluté (2) est constitué d'au moins un type de particules d'essai (2-1, 2-2) dont la charge électrique est à déterminer et en outre constitué d'au moins un type de particules de référence portant une charge de référence prédéfinie, où la charge électrique du au moins un type de particules d'essai est déterminée en fonction de la distribution du moins un type de particules de référence du soluté.

12. Procédé selon l'une quelconque des revendications 8 à 11, où la concentration du soluté (2) est ajustée de manière que la au moins une mesure sépare les particules du soluté individuelles (2), l'évolution spatio-temporelle de la distribution du soluté étant déterminée pour chaque particule séparément, de sorte que la charge peut être ou est déterminée pour chaque particule.

13. Système permettant de mesurer la charge d'un soluté ou la force ionique d'une solution (1) conformément à la méthode de l'une quelconque des revendications précédentes, le système comprenant au moins les composants suivants :

   - un espace de mesure (3) doté d'une ou plusieurs parties formant paroi (31, 32) configuré pour présenter un potentiel électrique de surface ;
   - une lentille (5) agencée et configurée pour recueillir le signal optique du soluté (2) ;
   - un détecteur agencé et configuré pour détecter le signal optique recueilli par la lentille (5) ;
   - un dispositif d'enregistrement électronique configuré pour enregistrer le signal détecté par le détecteur ;
   - une source d'éclairage pour illuminer le soluté (2) dans l'espace de mesure (3) ;
   - un ordinateur configuré et agencé pour déterminer le paramètre optique à partir du signal enregistré et pour déterminer la charge électrique (q) du au moins un type de particules (2-1, 2-2) de soluté (2) ;
   - une interface configurée et agencée pour communiquer la charge déterminée (q) du au moins un type de particules du soluté.

14. Produit-programme informatique comprenant un code du programme informatique stocké sur un support non transitoire, où le code du programme informatique est exécuté sur l'ordinateur du système selon la revendication 13, le système amenant les composants du système à exécuter un procédé de détermination de la charge d'un soluté constitué d'au moins un type de particules dans une solution aqueuse placée dans l'espace de mesure ou de détermination de la force ionique d'une solution placée dans l'espace de mesure, la solution aqueuse ayant une force ionique et contenant le soluté constitué d'au moins un type de particules, le procédé comprenant les étapes qui consistent à :

   - Attribuer un potentiel électrique de surface aux une ou plusieurs parties formant paroi (31, 32), poussant le soluté (2, 2-1, 2-2) à adopter une distribution du soluté (c) dans l'espace de mesure (3) ;
   - Enregistrer un signal optique à partir du soluté (2, 2-1, 2-2), le signal étant sensible à la distribution du soluté (c) dans l'espace de mesure (3) ;
   - Déterminer un paramètre optique à partir du signal optique enregistré, le paramètre optique étant indicatif de la distribution du soluté (c) dans l'espace de mesure (3) ;
   - Déterminer, à partir du paramètre optique, à partir du potentiel de surface électrique et également

   a) à partir de la force ionique de la solution (1), la charge du soluté ou
   b) à partir de la charge du soluté (2, 2-1, 2-2), la force ionique de la solution (1),
   **caractérisé en ce que**
   les une ou plusieurs parties formant paroi (31, 32) comprennent chacune une couche électriquement conductrice, où le signal optique du soluté est sensible à la distance par rapport à un champ électromagnétique qui couple le soluté et la couche électriquement conductrice des une ou plusieurs parties formant paroi, de sorte que le paramètre optique est indicateur d'une distribution de la distance du soluté et/ou
   **caractérisé en ce que**
   l'espace de mesure (3) comprend deux parties formant paroi parallèles (31, 32) agencées à une distance qui permet la formation d'un flux parabolique et laminaire (6) dans l'espace de mesure, ledit flux (6) étant créé par le biais d'une différence de pression.

Fig. 1

Fig. 2

Fig. 3

Fig. 4

Fig. 5

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2002040851 A

**Non-patent literature cited in the description**

- **CALIN PLESA** ; **STEFAN W KOWALCZYK** ; **RUBEN ZINSMEESTER** ; **ALEXANDER Y GROSBERG** ; **YITZHAK RABIN** ; **CEES DEKKER**. Fast translocation of proteins through solid state Nanopores. *Nano letters*, 2013, vol. 13 (2), 658-663
- **KEVIN J FREEDMAN** ; **MAIKE JÜRGENS** ; **ANMIV PRABHU** ; **CHI WON AHN** ; **PER JEMTH** ; **JOSHUA B EDEL** ; **MIN JUN KIM**. Chemical, thermal, and electric field induced unfolding of single protein molecules studied using nanopores. *Analytical chemistry*, 2011, vol. 83 (13), 5137-5144
- **MADHAVI KRISHNAN et al.** Geometry-induced electrostatic trapping of nanometrixc objects in a fluid. *Nature*, 2010, vol. 467 (7316), 692-695
- **FRANCCSCA RUGGERI et al.** Single-molecule electrometry. *Nature Nanotechnology*, 2017, vol. 12 (5), 488-495